# FASCICULE DE BREVET EUROPEEN

(11) **EP 2 767 499 B1**
(45) Date de publication et mention de la délivrance du brevet: **30.09.2015**
(21) Numéro de dépôt: 13155269.7
(22) Date de dépôt: 14.02.2013
(51) Int. Cl.: B66C 23/28, E04H 12/00, F16B 21/00, F16B 7/04, F16B 21/14

(54) **Dispositif d'éclissage pour lier deux éléments de mât et ensemble comprenant deux éléments de mât et de tels dispositifs d'éclissage**
Laschenverbindungsvorrichtung zur Verbindung von zwei Mastelementen, und Anordnung, die zwei Mastelemente und solche Laschenverbindungsvorrichtungen umfasst
Splinting device for connecting two strut members and assembly comprising two strut members and such splinting devices

(43) Date de publication de la demande: 20.08.2014
(73) Titulaire: Manitowoc Crane Group France, 69130 Ecully (FR)
(72) Inventeur: Rotat, François, 03000 MOULINS (FR); Barbet, Christophe, 69110 SAINTE FOY LES LYON (FR)
(74) Mandataire: Chevalier, Renaud Philippe

(56) Documents cités:
- EP-A1- 0 530 114
- EP-A1- 0 974 546

## Description

La présente invention se rapporte à un dispositif d'éclissage pour la liaison entre deux éléments de mât. Cette invention s'applique plus particulièrement mais non exclusivement, à la liaison démontable des éléments de mât constituant la tour verticale réhaussable d'une grue à tour, telle qu'une grue utilisée sur les chantiers de construction de bâtiments. De plus, la présente invention concerne un ensemble comprenant deux éléments de mât liés par de tels dispositifs d'éclissage.

La tour verticale d'une telle grue est habituellement constituée d'éléments de mât superposables, appelés à être assemblés entre eux lors du montage de la grue sur son lieu d'utilisation, et à être séparés les uns des autres lors du démontage de la grue. Les éléments de mât d'une grue à tour sont conçus, en ce qui concerne leur hauteur, de manière à faciliter le transport de la grue à l'état démonté, et aussi de manière à permettre l'adaptation de la hauteur totale de la grue en fonction des conditions et contraintes d'utilisation de cette grue sur les chantiers.

Les éléments de mât, habituellement de section horizontale carrée, sont constitués chacun par quatre membrures d'angle, réunies deux à deux par des structures en treillis situées dans les plans verticaux des quatre faces latérales de l'élément de mât.

Pour constituer la tour d'une grue, ces éléments de mât sont disposés verticalement les uns au-dessus des autres, et ils sont reliés rigidement les uns aux autres par la réunion des extrémités rapprochées de leurs membrures d'angle respectives. Ainsi, des dispositifs d'éclissage sont à prévoir, pour réaliser des liaisons « bout à bout » entre les membrures d'angle appartenant à des éléments de mât superposés, ces liaisons devant assurer la continuité des membrures d'angle de la tour verticale et la transmission des efforts longitudinaux et transversaux provenant des sollicitations produites par la partie supérieure de la grue. De plus, comme il résulte de ce qui précède, ces dispositifs d'éclissage doivent réaliser une liaison rigide mais aussi démontable.

D'une manière généralement connue, un tel dispositif d'éclissage pour la liaison entre deux éléments de mât comprend habituellement une partie située au sommet d'une membrure d'angle appartenant à un élément de mât « inférieur », une partie complémentaire située à la base d'une membrure d'angle correspondante appartenant à un élément de mât « supérieur », et au moins un axe de liaison horizontal amovible, traversant simultanément au moins un alésage d'axe horizontal de la partie précitée appartenant à l'élément de mât inférieur et au moins un autre alésage d'axe horizontal de la partie complémentaire appartenant à l'élément de mât supérieur.

Les réalisations actuelles de dispositifs d'éclissage comprennent, préférentiellement, au moins deux axes de liaison amovibles superposés, et orientés selon deux directions horizontales orthogonales l'une à l'autre. A cet égard, il est fait référence aux brevets français FR 1436649, FR 2680813 et FR 2781535.

A titre de variantes, on mentionnera aussi les dispositifs d'éclissage à axes croisés ou non qui utilisent des pièces additionnelles extérieures, indépendantes des membrures d'angle - voir les brevets français FR 2044346 et FR 2519620. Les pièces additionnelles sont généralement des plaques disposées verticalement, parallèlement à des faces des membrures d'angle.

Bien entendu, la configuration des dispositifs d'éclissage est elle-même dépendante de celle des membrures d'angle, qui habituellement sont soit des profilés tubulaires de section horizontale sensiblement carrée, soit de simples cornières donc des profilés de section horizontale en « L » - voir aussi le document FR 2185217, qui prévoit des axes de liaison orthogonaux, chacun étant perpendiculaire à une face de la cornière.

Les axes de liaison, qui dans ces dispositifs d'éclissage réalisent la connexion entre deux éléments de mât, sont soumis à des efforts très élevés et très concentrés, les dimensions de ces axes étant nécessairement limitées. Pour avoir l'axe le plus petit possible, il est nécessaire de minimiser la flexion dans ce dernier. Il faut aussi augmenter le plus possible la surface de chaque portée cylindrique sur laquelle l'axe de liaison est appuyé, afin de diminuer la pression sur cette surface. Par ailleurs, la conception d'un dispositif d'éclissage doit être telle que celui-ci puisse rattraper les variations d'épaisseurs, ou que ces dernières ne posent pas de problèmes de fabrication.

Afin de diminuer la pression exercée par un axe de liaison sur une portée cylindrique, pour un effort donné, on dispose de deux moyens à savoir soit augmenter l'épaisseur, soit augmenter le diamètre de la portée. Pour un axe de diamètre donné, il faut donc augmenter l'épaisseur. Ceci oblige à mettre en place localement des « plats de matage », c'est-à-dire des plaques percées d'un trou circulaire, venant dans le prolongement de la portée cylindrique d'une partie du dispositif d'éclissage.

D'une manière habituelle, comme le prévoient par exemple les brevets français FR 2680813 et FR 2781535 précités, les plaques ou plats de matage sont soudés contre les faces extérieures des parties correspondantes du dispositif d'éclissage. Cette solution est appropriée pour les dispositifs d'éclissage selon ces documents, qui comportent une éclisse intérieure fixe ou démontable engagée dans au moins une membrure d'angle tubulaire, de section carrée. Ces dispositifs ont toutefois l'inconvénient de ne pas permettre l'inspection des éclisses une fois les éléments de mât assemblés entre eux. De plus, ils nécessitent l'utilisation de pièces moulées, à savoir les éclisses intérieures.

Dans le cas de membrures d'angle constituées par un profilé de section en « L » autrement dit une cornière, selon le brevet français FR 2185217 précité, les dimensions des cornières restent limitées et ne permettent pas une application à des grues très puissantes. Pour augmenter la surface des portées, ce document prévoit des renforts extérieurs ou intérieurs soudés sur des éclisses, ce qui occasionne une discontinuité entre la membrure et l'éclisse.

Enfin, dans les documents précités FR 2044346 et FR 2519620 ayant recours à des pièces additionnelles extérieures, des renforts extérieurs soudés aux membrures d'angle peuvent être prévus, mais ce type de dispositif d'éclissage impose de manipuler des pièces plus nombreuses si bien qu'il est moins pratique et nécessite un temps de montage plus long.

La présente invention vise à fournir un dispositif d'éclissage qui, tout en conservant les avantages de certains dispositifs connus rappelés ci-dessus, en évite les inconvénients, donc un dispositif d'éclissage qui, tout en évitant les éclisses intérieures, permet de diminuer la flexion dans les axes de liaison et d'augmenter l'épaisseur des portées d'appui, ce dispositif étant adapté aux grues à tour de forte puissance.

A cet effet, l'invention a pour objet un dispositif d'éclissage, pour lier deux éléments de mât superposés d'une grue à tour, en particulier pour lier de manière démontable un élément de mât inférieur à un élément de mât supérieur, le dispositif d'éclissage comprenant :
- une partie de sommet qui est située au sommet d'une membrure inférieure d'angle et qui prolonge un élément de mât inférieur,
- une partie de base qui est située à la base d'une membrure supérieure d'angle correspondante et qui prolonge un élément de mât supérieur, et
- au moins deux axes de liaison amovibles et orientés respectivement suivant une première direction et une deuxième direction substantiellement orthogonales entre elles,
   le dispositif d'éclissage étant **caractérisé en ce** que :
- la partie de sommet comprend deux éclisses primaires solidarisées à deux faces externes primaires qui sont verticales, opposées et définies par la membrure inférieure d'angle, chaque éclisse primaire dépassant au-dessus du sommet de la membrure inférieure d'angle, chaque éclisse primaire présentant des orifices primaires coaxiaux ;
- la partie de sommet comprend deux éclisses secondaires solidarisées à deux faces externes secondaires qui sont verticales, opposées et définies par la membrure inférieure d'angle chaque éclisse secondaire dépassant au-dessus du sommet de la membrure inférieure d'angle, chaque éclisse secondaire présentant des orifices secondaires coaxiaux, le point central de chaque orifice primaire étant situé, par rapport au sommet de la membrure inférieure d'angle respective, à une hauteur primaire différente de la hauteur secondaire à laquelle est situé le point central d'un orifice secondaire respectif ;
- la partie de base est formée par une base tubulaire d'une membrure supérieure d'angle de l'élément de mât supérieur, ladite partie de base étant disposée entre les éclisses primaires et entre les éclisses secondaires,
- la partie de base présentant des trous primaires et des trous secondaires qui débouchent respectivement sur des faces externes verticales et opposées de la membrure supérieure d'angle, les trous primaires et les trous secondaires étant agencés pour coïncider en alignement respectivement avec les orifices primaires et avec les orifices secondaires, de sorte qu'un axe de liaison passe à travers chaque orifice primaire et chaque trou primaire et que l'autre axe de liaison passe à travers chaque orifice secondaire et chaque trou secondaire,
- le dispositif d'éclissage comprend en outre des plaques primaires et des plaques secondaires qui sont solidarisées respectivement contre des faces internes primaires et des faces internes secondaires définies par la membrure supérieure d'angle, les plaques primaires et des plaques secondaires étant conformées pour contribuer respectivement à la portée d'appui des axes de liaison.

En d'autres termes, contrairement à l'art antérieur, la présente invention prévoit de situer toutes les éclisses primaires et secondaires en position externes, relativement aux membrures inférieures d'angle, et inversement de placer les plaques primaires et secondaires à l'intérieur des membrures inférieures d'angle, dans un espace qui se trouve désormais libéré du fait de l'absence de toute éclisse intérieure.

La position intérieure des plaques primaires et secondaires permet de limiter le déport des éclisses primaires et secondaires vers l'extérieur, ces éclisses restant toutes dans des plans verticaux qui affleurent les faces externes des membrures inférieures d'angle.

La position intérieure des plaques primaires et secondaires, combinée avec le faible déport des éclisses primaires et secondaires, permet de diminuer aussi la flexion dans les axes de liaison, même si certains jeux sont prévus pour « récupérer » les variations d'épaisseur des plats de matage ou des membrures d'angle elles-mêmes.

Dans la présente demande, les termes « haut », « bas », « supérieur », « inférieur », « horizontal », « vertical », « superposé », « oblique », « hauteur » et leurs dérivés font référence à la position ou à l'orientation d'un élément ou d'un composant, cette position ou cette orientation étant considérée lorsque la grue à tour est en configuration de service sur un sol horizontal. Par exemple, lorsque la grue à tour est en configuration de service sur un sol horizontal, la tour ou mât de la grue à tour s'étend suivant une direction verticale.

Selon un mode de réalisation de l'invention, les plaques primaires et les plaques secondaires sont solidarisées par soudure respectivement contre des faces internes primaires et des faces internes secondaires définies par la membrure supérieure d'angle.

Ainsi, l'assemblage des plaques primaires et secondaires peut être précis et mécaniquement résistant.

Selon un mode de réalisation de l'invention, chaque membrure inférieure d'angle a globalement la forme d'un profilé tubulaire avec une section horizontale rectangulaire, de préférence carrée, chaque membrure inférieure d'angle étant formée par au moins deux cornières solidarisées entre elles par soudage.

Ainsi, de telles cornières permettent l'accès à l'intérieur de membrures inférieures d'angle pour souder les plaques primaires et secondaires. En effet, il est possible de souder les plaques primaires et les plaques secondaires à l'intérieur de ces deux profilés en « L » avant de souder ces profilés en « L » l'un à l'autre.

Selon un mode de réalisation de l'invention, chaque cornière a une section transversale en forme de « L » avec deux ailes dont les bords sont soudés aux bords des ailes d'une cornière adjacente.

Ainsi, de telles cornières ou profilés en « L » permettent de former des membrures inférieures d'angle de forme carrée.

Selon un mode de réalisation de l'invention, chaque éclisse primaire a une forme globalement plate et parallèle à la face externe primaire correspondante, et chaque éclisse secondaire a une forme globalement plate et parallèle à la face externe secondaire correspondante.

Ainsi, de telles éclisses primaires et secondaires sont relativement compactes dans un plan horizontal.

Par ailleurs, la présente invention a pour objet un ensemble, pour grue à tour, l'ensemble comprenant un élément de mât inférieur et un élément de mât supérieur, l'élément de mât inférieur comportant plusieurs membrures inférieures d'angle, l'ensemble comprenant des dispositifs d'éclissage selon l'invention agencés pour lier l'élément de mât inférieur et l'élément de mât supérieur, de préférence de manière démontable.

Ainsi, un tel ensemble permet un assemblage rapide et résistant des éléments de mât consécutifs.

Selon un mode de réalisation de l'invention, l'élément de mât inférieur comporte quatre membrures inférieures d'angle qui sont disposées respectivement aux quatre sommets d'un carré, et l'élément de mât supérieur comporte quatre membrures supérieures d'angle qui sont disposées respectivement aux quatre sommets d'un carré.

Ainsi, les éléments de mâts présentent une forme carrée en section transversale.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective d'un élément de mât inférieur appartenant à un ensemble conforme à l'invention ;
- la figure 2 est une vue en perspective de l'ensemble conforme à l'invention comprenant l'élément de mât inférieur de la figure 1 et un élément de mât supérieur au cours de leur assemblage au moyen de dispositifs d'éclissage conformes à l'invention ;
- la figure 3 est une vue à plus grande échelle du détail III à la figure 2 ;
- la figure 4 est une vue similaire à la figure 2, après l'assemblage des éléments de mât inférieur et supérieur appartenant à l'ensemble de la figure 2 ;
- la figure 5 est une coupe, suivant le plan V à la figure 4 ;
- la figure 6 est une coupe, suivant le plan VI à la figure 4 ;
- la figure 7 est une vue à plus grande échelle du détail VII à la figure 5 ; et
- la figure 8 est une vue à plus grande échelle du détail VIII à la figure 5.

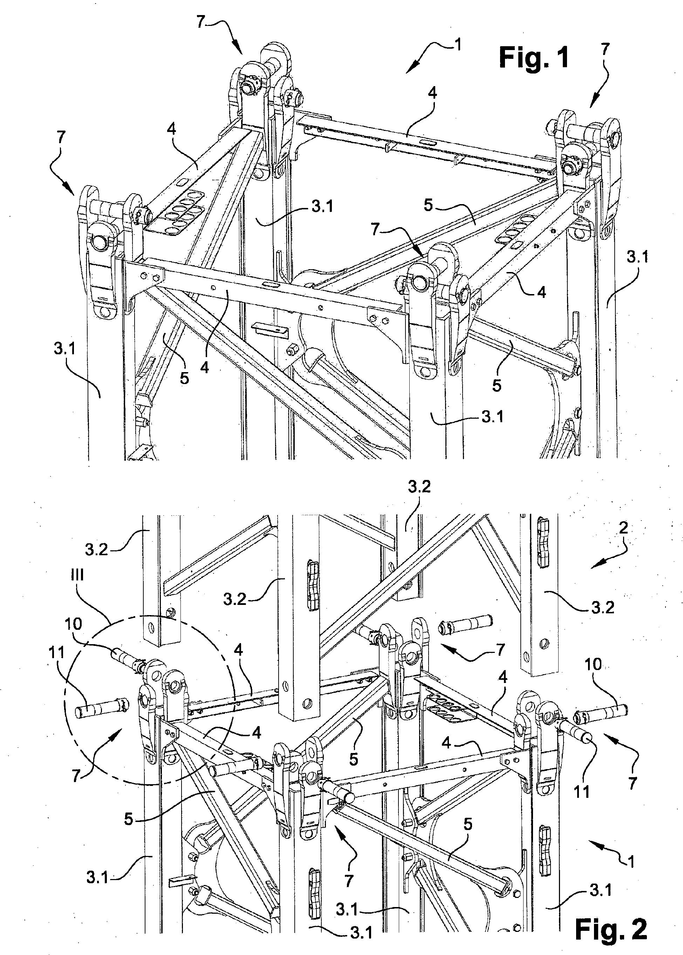

La figure 1 illustre un élément de mât inférieur 1. Les figures 2, 3 et 4 représentent un ensemble 1.2 qui appartient à une grue à tour, qui est conforme à l'invention et qui comprend deux éléments de mât consécutifs, à savoir l'élément de mât dit inférieur 1 et un élément de mât dit supérieur 2. L'élément de mât inférieur 1 et l'élément de mât supérieur 2 sont dits consécutifs, car ils sont superposés consécutivement, lors du montage de la grue à tour.

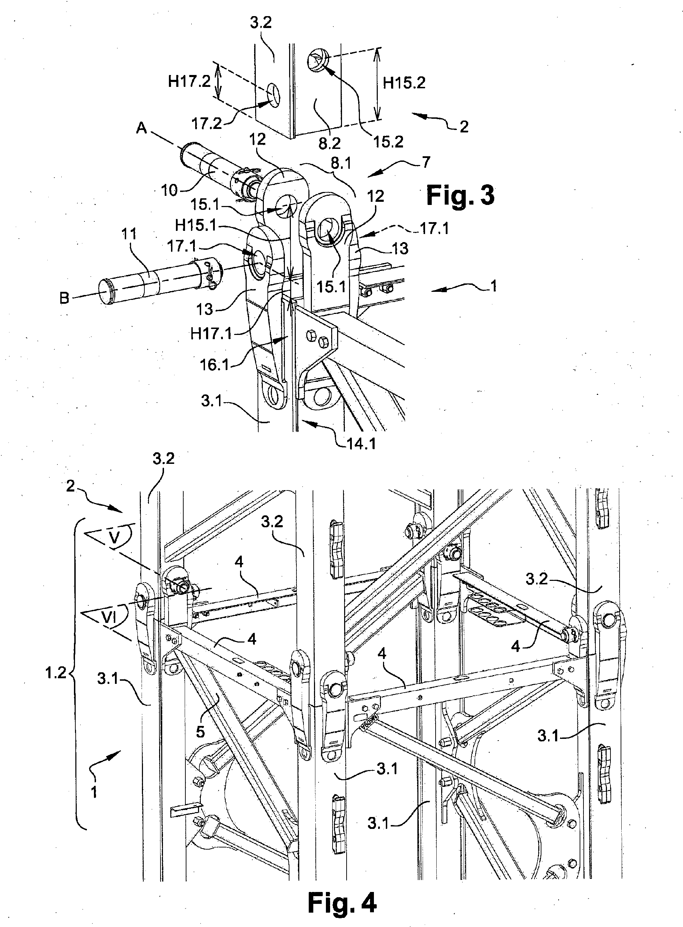

Dans l'exemple des figures 2 à 4, l'élément de mât inférieur 1 est placé sous l'élément de mât supérieur 2. En d'autres termes, l'élément de mât inférieur 1 occupe une position inférieure et l'élément de mât supérieur 2 occupe une position supérieure. Comme le montrent les figures 2 et 4, l'élément de mât supérieur 2 est assemblé avec l'élément de mât infrieur 1 au moyen de plusieurs dispositifs d'éclissage 7.

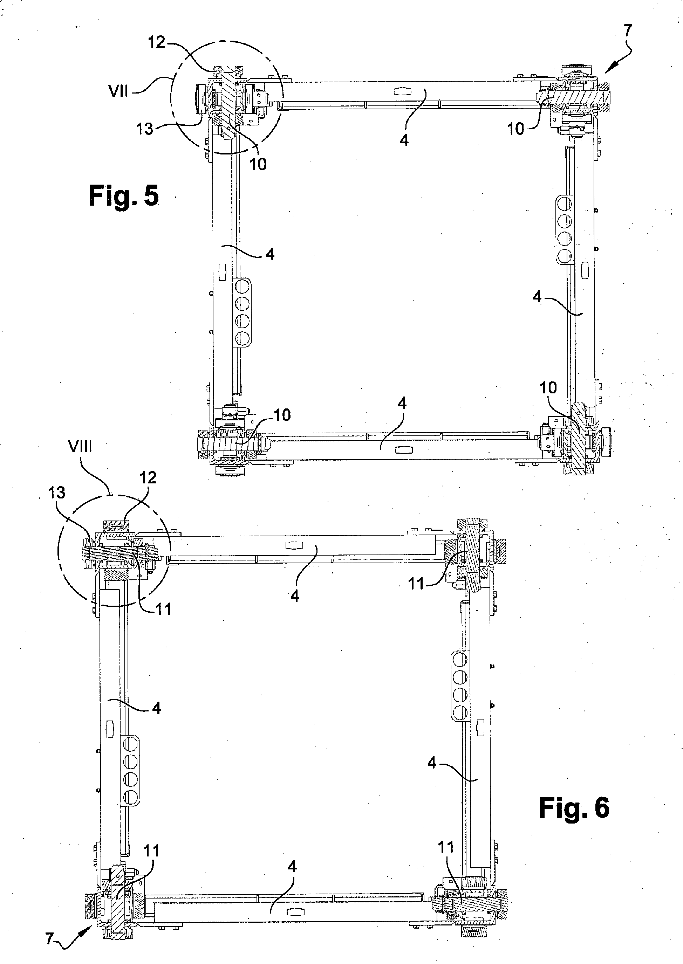

Comme le montrent les figures 5 et 6, l'élément de mât inférieur 1 présente une section transversale ayant une forme globalement carrée dans un plan perpendiculaire à une membrure inférieure d'angle 3.1, donc dans un plan horizontal lorsque la grue à tour 1.2 est en configuration de service sur un sol horizontal. L'élément de mât inférieur 1 comprend quatre membrures inférieures d'angle 3.1, qui s'étendent verticalement. Entre les membrures inférieures d'angle 3.1 s'étendent quatre faces latérales de l'élément de mât inférieur 1. Dans chaque face latérale s'étend une structure en treillis, composée de traverses horizontales 4 et de traverses diagonales 5.

De même, comme le montrent les figures 5 et 6, l'élément de mât supérieur 2 présente une section transversale ayant une forme globalement carrée dans un plan perpendiculaire à une membrure supérieure d'angle 3.2, donc dans un plan horizontal lorsque la grue à tour est en configuration de service sur un sol horizontal. L'élément de mât supérieur 2 comprend quatre membrures supérieures d'angle 3.2 qui s'étendent verticalement.

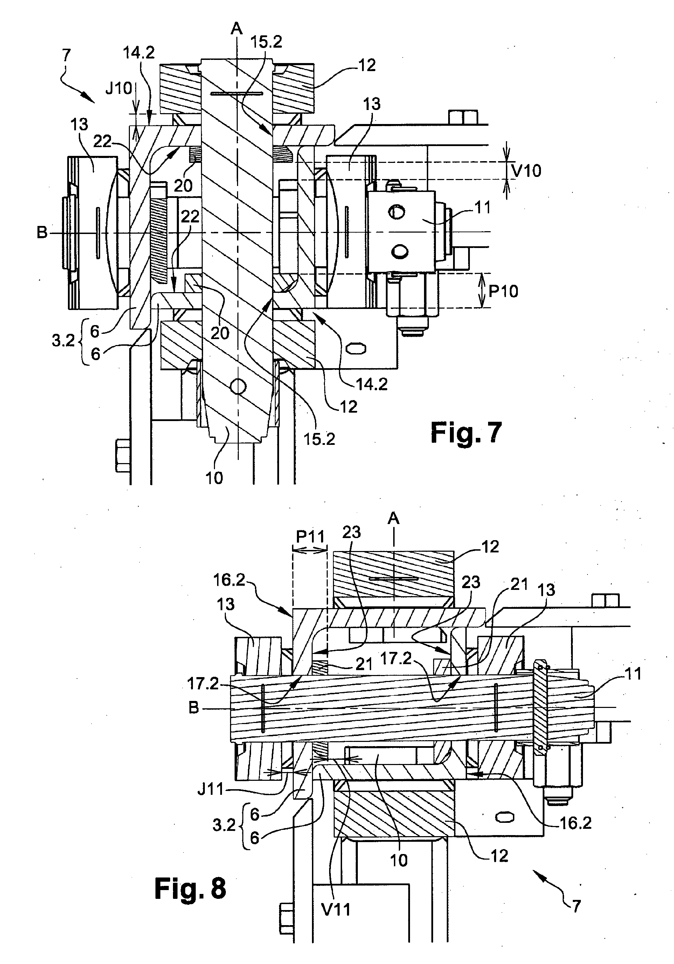

Comme le montrent les figures 7 et 8, chaque membrure supérieure d'angle 3.2 est formée par deux cornières 6 solidarisées entre elles par soudage. Dans l'exemple des figures 7 et 8, chaque cornière 6 a une section transversale en forme de « L ». À cet effet, les bords des deux ailes d'une cornière 6 sont soudés aux bords des ailes de l'autre cornière 6. Les cornières 6 sont agencées de manière à former un profilé tubulaire de section horizontale sensiblement rectangulaire, et en l'occurrence carrée. Chaque profilé tubulaire formé par deux cornières 6 est orienté comme la section carrée respective de l'élément de mât supérieur 2.

De même, chaque membrure inférieure d'angle 3.1 est formée par deux cornières solidarisées entre elles par soudage. Chacune de ces cornière a une section transversale en forme de « L ». À cet effet, les bords des deux ailes d'une cornière sont soudés aux bords des ailes de l'autre cornière. Ces cornières sont agencées de manière à former un profilé tubulaire de section horizontale sensiblement rectangulaire, et en l'occurrence carrée. Chaque profilé tubulaire formé par deux cornières est orienté comme la section carrée respective de l'élément de mât inférieur 1.

Chaque sommet d'une membrure inférieure d'angle 3.1 est assemblé de manière démontable à une base respective d'une membrure supérieure d'angle 3.2 appartenant à l'élément de mât supérieur 2 qui est superposé à l'élément de mât inférieur 1.

Pour réaliser cet assemblage démontable, l'élément de mât inférieur 1 comprend quatre dispositifs d'éclissage, dont chacun est désigné globalement par le repère 7. Comme le montrent les figures 3, 7 et 8, chaque dispositif d'éclissage 7 comprend :
- une partie dite de sommet 8.1, qui est située au sommet d'une membrure inférieure d'angle respective 3.1,
- une partie de base 8.2, qui est située à la base d'une membrure supérieure d'angle correspondante 3.2 , et
- deux axes de liaison 10 et 11, qui sont orientés respectivement suivant une première direction A et une deuxième direction B, lorsque l'élément de mât inférieur 1 est en position assemblée avec l'élément de mât supérieur 2.

La première direction A est orthogonale à la deuxième direction B. La première direction A et la deuxième direction B sont globalement horizontales.

La partie de sommet 8.1 comprend deux éclisses primaires 12 et deux éclisses secondaires 13.

Les éclisses primaires 12 sont solidarisées par soudures sur deux faces externes primaires, dont une porte la référence 14.1 à la figure 3 et qui sont définies par la membrure inférieure d'angle 3.1. Les deux faces externes primaires 14.1 sont verticales et opposées, c'est-à-dire disposées symétriquement par rapport à un axe central de la membrure inférieure d'angle 3.1.

Les éclisses primaires 12 sont agencées de façon à dépasser au-dessus du sommet de la membrure inférieure d'angle 3.1. En d'autres termes, les éclisses primaires 12 sont en porte-à-faux par rapport à l'extrémité de la membrure inférieure d'angle 3.1.

Chaque éclisse primaire 12 présente un alésage ou orifice primaire 15.1 qui est traversant. Les orifices primaires 15.1 sont coaxiaux et centrés sur la première direction A. Un point central de chaque orifice primaire 15.1 est situé à une hauteur primaire H15.1 au-dessus de l'extrémité de la membrure inférieure d'angle 3.1. Comme le montre la figure 3, la hauteur primaire H15.1 est mesurée à partir d'un centre d'un orifice primaire respectif 15.1.

Les éclisses secondaires 13 sont solidarisées par soudures sur deux faces externes secondaires, dont une porte la référence 16.1 à la figure 3 et qui sont définies par la membrure inférieure d'angle 3.1. Les deux faces externes secondaires 16.1 sont verticales et opposées, c'est-à-dire disposées symétriquement par rapport à un axe central de la membrure inférieure d'angle 3.1.

Les éclisses secondaires 13 dépassent au-dessus du sommet de la membrure inférieure d'angle 3.1. En d'autres termes, les éclisses secondaires 13 sont en porte-à-faux par rapport à l'extrémité de la membrure inférieure d'angle 3.1.

Les éclisses secondaires 13 présentent deux alésages ou orifices secondaires 17.1 qui sont traversants. Les orifices secondaires 17.1 sont coaxiaux et centrés sur deuxième direction B. Un point central de chaque orifice secondaire 17.1 est situé à une hauteur secondaire H17.1 au-dessus de l'extrémité de la membrure inférieure d'angle 3.1. Comme le montre la figure 3, la hauteur secondaire H17.1 est mesurée à partir d'un centre d'un orifice secondaire respectif 17.1.

Dans l'exemple de la figure 3, la hauteur secondaire H17.1 est inférieure à la hauteur primaire H15.1.

La partie de base 8.2 est située à la base de la membrure supérieure d'angle 3.2. En d'autres termes, la partie de base 8.2 est située au point le plus bas de la membrure supérieure d'angle 3.2.

La partie de base 8.2 comprend deux trous primaires 15.2 et deux trous secondaires 17.2, qui sont positionnés dans la membrure supérieure d'angle 3.2. À la figure 3, un trou primaire 15.2 et un trou secondaire 17.2 sont visibles.

Comme le montre la figure 7, les trous primaires 15.2débouchent sur deux faces externes opposées 14.2 de la membrure supérieure d'angle 3.2. Les trous primaires 15.2 sont horizontaux et coaxiaux entre eux. Comme le montre la figure 3, un point central de chaque trou primaire 15.2 est situé à une hauteur H15.2 au-dessus de la base de la membrure supérieure d'angle 3.2.

Comme le montre la figure 7, chaque dispositif d'éclissage 7 comprend en outre deux plaques primaires 20 qui sont solidarisées par soudure contre des faces internes 22 au niveau des trous primaires 15.2. Les plaques primaires 20 remplissent une fonction de matage pour la membrure supérieure d'angle correspondante 3.2. Donc les plaques primaires 20 pourraient alternativement être dénommées « plats de matage ».

Chaque plaque primaire 20 présente un trou circulaire qui est agencé de façon à prolonger un orifice primaire respectif 15.1 vers l'intérieur. Ainsi, les orifices primaires 15.1 et les trous circulaires associés permettent de former deux premières portées cylindriques.

Comme le montre la figure 8, les trous secondaires 17.2 débouchent sur deux autres faces externes opposées 16.2 de la membrure supérieure d'angle 3.2. Les trous secondaires 17.2 sont horizontaux et coaxiaux entre eux. Comme le montre la figure 3, un point central de chaque trou secondaire 17.2 est situé à une hauteur H17.2 au-dessus de la base de cette membrure supérieure d'angle 3.2.

Comme le montre la figure 7, chaque dispositif d'éclissage 7 comprend en outre deux plaques secondaires 21. Les plaques secondaires 21 sont solidarisées par soudure sur des faces internes 23 au niveau des trous secondaires 17.2. Les plaques secondaires 21 remplissent une fonction de matage pour la membrure supérieure d'angle correspondante 3.2. Donc les plaques secondaires 21 pourraient alternativement être dénommées « plats de matage ».

Chaque plaque secondaire 21 présente un trou circulaire qui est agencé de façon à prolonger vers l'intérieur un orifice secondaire respectif 17.2. Ainsi, les orifices secondaires 17.2 et les trous circulaires associés permettent de former deux deuxièmes portées cylindriques.

En position assemblée de l'ensemble 1.2 (figures 4 à 8), la base d'une membrure supérieure d'angle 3.2 est posée sur le sommet de la membrure inférieure d'angle 3.1 correspondante. Ainsi, en configuration de service, la partie de base 8.2 de la membrure supérieure d'angle 3.2 est disposée entre les éclisses primaires 12 et entre les éclisses secondaires 13. En d'autres termes, les éclisses primaires 12 et les éclisses secondaires 13 définissent un volume de réception pour la partie de base 8.2.

Dans la position assemblée de l'ensemble 1.2 (figures 4 à 8), les orifices primaires, secondaires et les trous primaires et secondaires coïncident en alignement , pour recevoir les axes de liaison 10 et 11. Plus particulièrement :
- L'axe de liaison 10 passe à travers les orifices primaires 15.1 et les trous primaires 15.2.
- L'axe de liaison 11 passe à travers les orifices secondaires 17.1 et les trous secondaires 17.2..

Les deux axes de liaison 10 et 11 sont maintenus en position assemblée (figures 4 à 8) par des moyens appropriés tels que des goupilles et/ou des écrous.

Comme le montre la figure 7, l'axe de liaison 10 est en appui de chaque côté sur une portée cylindrique de largeur P10, qui représente la somme de l'épaisseur d'une cornière 6 et de l'épaisseur de la plaque primaire 20. Le montage de l'axe de liaison 10 permet de compenser le jeu J10 entre la cornière 6 et l'éclisse 12 voisine. De plus, le montage de l'axe de liaison 10 permet de compenser la tolérance de fabrication V10 sur l'épaisseur de la plaque primaire 20.

Comme le montre la figure 8, l'axe de liaison 11 est en appui de chaque côté sur une portée cylindrique de largeur P11, qui représente la somme de l'épaisseur d'une cornière 6 et de l'épaisseur de la plaque secondaire 21.. Le montage de l'axe de liaison 11 permet de compenser le jeu J11 entre la cornière 6 et l'éclisse 13 voisine. De plus, le montage de l'axe de liaison 11 permet de compenser la tolérance de fabrication V11 sur l'épaisseur de la plaque secondaire 21.

Les deux axes de liaison 10 et 11 restent démontables, de façon à pouvoir à nouveau séparer l'éléments de mât inférieur 1 de l'élément de mât supérieur 2.

Comme il va de soi, l'invention ne se limite pas à la seule forme d'exécution de ce dispositif d'éclissage qui a été décrite ci-dessus, à titre d'exemple ; elle en embrasse, au contraire, toutes les variantes de réalisation et d'application entrant dans le cadre des revendications annexées. C'est ainsi, notamment, que l'on ne s'écarterait pas du cadre de l'invention :
- en modifiant le détail des formes des éclisses ;
- en réalisant le soudage des plaques primaires et secondaires sur les membrures supérieures d'angle par tout procédé de soudage approprié ;
- en utilisant le dispositif d'éclissage conforme à l'invention pour lier de tous genres d'éléments de mât : éléments constitutifs de la tour d'une grue, éléments constitutifs de mâts d'antennes, éléments constitutifs de mâts-supports, par exemple pour caméras de surveillance, etc.

## Revendications

1. Dispositif d'éclissage (7), pour lier deux éléments de mât superposés d'une grue à tour, en particulier pour lier de manière démontable un élément de mât inférieur (1) à un élément de mât supérieur (2), le dispositif d'éclissage (7) comprenant :
- une partie de sommet (8.1) qui est située au sommet d'une membrure inférieure d'angle (3.1) et qui prolonge un élément de mât inférieur (1),
- une partie de base (8.2) qui est située à la base d'une membrure supérieure d'angle correspondante (3.2) et qui prolonge un élément de mât supérieur (2), et
- au moins deux axes de liaison (10, 11) amovibles et orientés respectivement suivant une première direction (A) et une deuxième direction (B) substantiellement orthogonales entre elles,
le dispositif d'éclissage (7) étant **caractérisé en ce que** :
- la partie de sommet (8.1) comprend deux éclisses primaires (12) solidarisées à deux faces externes primaires (14.1) qui sont verticales, opposées et définies par la membrure inférieure d'angle (3.1), chaque éclisse primaire (12) dépassant au-dessus du sommet de la membrure inférieure d'angle (3.1), chaque éclisse primaire (12) présentant des orifices primaires (15.1) coaxiaux ;
- la partie de sommet (8.1) comprend deux éclisses secondaires (13) solidarisées à deux faces externes secondaires (16.1) qui sont verticales, opposées et définies par la membrure inférieure d'angle (3.1), chaque éclisse secondaire (13) dépassant au-dessus du sommet de la membrure inférieure d'angle (3.1), chaque éclisse secondaire (13) présentant des orifices secondaires (17.1) coaxiaux, le point central de chaque orifice primaire (15.1) étant situé, par rapport au sommet de la membrure inférieure d'angle respective (3.1), à une hauteur primaire (H15.1) différente de la hauteur secondaire (H17.1) à laquelle est situé le point central d'un orifice secondaire respectif(17.1) ;
- la partie de base (8.2) est formée par une base tubulaire d'une membrure supérieure d'angle (3.2) de l'élément de mât supérieur (2), ladite partie de base (8.2) étant disposée entre les éclisses primaires (12) et entre les éclisses secondaires (13),
- la partie de base (8.2) présentant des trous primaires (15.2) et des trous secondaires (17.2) qui débouchent respectivement sur des faces externes (14.2, 16.2) verticales et opposées de la membrure supérieure d'angle (3.2), les trous primaires (15.2) et les trous secondaires (17.2) étant agencés pour coïncider en alignement respectivement avec les orifices primaires (15.1) et avec les orifices secondaires (17.1), de sorte qu'un axe de liaison (10) passe à travers chaque orifice primaire (15.1) et chaque trou primaire (15.2) et que l'autre axe de liaison (11) passe à travers chaque orifice secondaire (17.1) et chaque trou secondaire (17.2),
- le dispositif d'éclissage (7) comprend en outre des plaques primaires (20) et des plaques secondaires (21) qui sont solidarisées respectivement contre des faces internes primaires (22) et des faces internes secondaires (23) définies par la membrure supérieure d'angle (3.2), les plaques primaires (20) et des plaques secondaires (21) étant conformées pour contribuer respectivement à la portée d'appui des axes de liaison (10, 11).

2. Dispositif d'éclissage (7) selon la revendication 1, dans lequel les plaques primaires (20) et les plaques secondaires (21) sont solidarisées par soudure respectivement contre des faces internes primaires (22) et des faces internes secondaires (23) définies par la membrure supérieure d'angle (3.2).

3. Dispositif d'éclissage (7) selon l'une des revendications précédentes, dans lequel chaque membrure inférieure d'angle (3.1) a globalement la forme d'un profilé tubulaire avec une section horizontale rectangulaire, de préférence carrée, chaque membrure inférieure d'angle (3.1) étant formée par au moins deux cornières (6) solidarisées entre elles par soudage.

4. Dispositif d'éclissage (7) selon la revendication 3, dans lequel chaque cornière (6) a une section transversale en forme de « L » avec deux ailes dont les bords sont soudés aux bords des ailes d'une cornière adjacente (6).

5. Dispositif d'éclissage (7) selon l'une des revendications précédentes, dans lequel chaque éclisse primaire (12) a une forme globalement plate et parallèle à la face externe primaire correspondante (14.1), et dans lequel chaque éclisse secondaire (13) a une forme globalement plate et parallèle à la face externe secondaire correspondante (16.1).

6. Ensemble (1.2), pour grue à tour, l'ensemble (1.2) comprenant un élément de mât inférieur (1) et un élément de mât supérieur (2), l'élément de mât inférieur (1) comportant plusieurs membrures inférieures d'angle (3.1), l'ensemble (1.2) comprenant des dispositifs d'éclissage (7) selon l'une des revendications précédentes agencés pour lier l'élément de mât inférieur (1) et l'élément de mât supérieur (2), de préférence de manière démontable.

7. Ensemble (1.2) selon la revendication 6, dans lequel l'élément de mât inférieur (1) comporte quatre membrures inférieures d'angle (3.1) qui sont disposées respectivement aux quatre sommets d'un carré, et dans lequel l'élément de mât supérieur (2) comporte quatre membrures supérieures d'angle (3.2) qui sont disposées respectivement aux quatre sommets d'un carré.

## Patentansprüche

1. Laschenverbandvorrichtung (7) zum Verbinden von zwei überlagerten Mastelementen eines Turmdrehkrans, insbesondere zum demontierbaren Verbinden eines unteren Mastelements (1) mit einem oberen Mastelement (2), wobei die Laschenverbandvorrichtung (7) Folgendes umfasst:
- einen Gipfelteil (8.1), der auf dem Gipfel eines Winkeluntergurts (3.1) liegt und ein unteres Mastelement (1) verlängert,
- einen Basisteil (8.2), der an der Basis eines entsprechenden Winkelobergurts (3.2) liegt und ein oberes Mastelement (2) verlängert, und
- mindestens zwei Verbindungsachsen (10, 11) die abnehmbar und jeweils entlang einer ersten Richtung (A) und einer zweiten Richtung (B), die zueinander im Wesentlichen orthogonal sind, ausgerichtet sind, Laschenverbandvorrichtung (7) **dadurch gekennzeichnet, dass**
- der Gipfelteil (8.1) zwei Hauptlaschen (12) umfasst, die mit zwei externen Primärseiten (14.1) fest verbunden sind, die vertikal, entgegengesetzt und durch den Winkeluntergurt (3.1) definiert sind, wobei jede Hauptlasche (12) oberhalb des Gipfels des Winkeluntergurts (3.1) vorsteht, wobei jede Hauptlasche (12) koaxiale Primäröffnungen (15.1) aufweist,
- der Gipfelteil (8.1) zwei Sekundärlaschen (13) umfasst, die mit zwei externen Sekundärseiten (16.1) fest verbunden sind, die vertikal, entgegengesetzt und durch den Winkeluntergurt (3.1) definiert sind, wobei jede Sekundärlasche (13) oberhalb des Gipfels des Winkeluntergurts (3.1) vorsteht, wobei jede Sekundärlasche (13) koaxiale Sekundäröffnungen (17.1) aufweist, wobei der Mittenpunkt jeder Primäröffnung (15.1) in Bezug auf den Gipfel des jeweiligen Winkeluntergurts (3.1) in einer Primärhöhe (H15.1), die von der Sekundärhöhe (H17.1) auf der der Mittenpunkt einer jeweiligen Sekundäröffnung (17.1) liegt, unterschiedlich ist,
- der Basisteil (8.2) aus einer röhrenförmigen Basis eines Winkelobergurts (3.2) des oberen Mastelements (2) gebildet ist, wobei der Basisteil (8.2) zwischen den Hauptlaschen (12) und zwischen den Sekundärlaschen (13) angeordnet ist,
- der Basisteil (8.2) Primärlöcher (15.2) und Sekundärlöcher (17.2) aufweist, die jeweils auf externen Seiten (14.2, 16.2) münden, die vertikal und dem Winkelobergurt (3.2) entgegengesetzt sind, wobei die Primärlöcher (15.2) und die Sekundärlöcher (17.2) eingerichtet sind, um in jeweiliger Ausrichtung mit den Primäröffnungen (15.1) und mit den Sekundäröffnungen (17.1) derart übereinzustimmen, dass eine Verbindungsachse (10) durch jede Primäröffnung (15.1) und jedes Primärloch (15.2) durchgeht, und dass die andere Verbindungsachse (11) durch jede Sekundäröffnung (17.1) und jedes Sekundärloch (17.2) durchgeht,
- die Laschenverbandvorrichtung (7) außerdem Primärplatten (20) und Sekundärplatten (21) umfasst, die jeweils gegen interne Primärseiten (22) und interne Sekundärseiten (23), die durch den Winkelobergurt (3.2) definiert sind, fest befestigt sind, wobei die Primärplatten (20) und die Sekundärplatten (21) ausgebildet sind, um jeweils zur Auflagefläche der Verbindungsachsen (10, 11) beizutragen.

2. Laschenverbandvorrichtung (7) nach Anspruch 1, wobei die Primärplatten (20) und die Sekundärplatten (21) durch Schweißen jeweils gegen interne Primärseiten (22) und interne Sekundärseiten (23), die durch den Winkelobergurt (3.2) definiert sind, fest verbunden sind.

3. Laschenverbandvorrichtung (7) nach einem der vorhergehenden Ansprüche, wobei jeder Winkeluntergurt (3.1) insgesamt die Form eines röhrenförmigen Profils mit einem horizontalen rechteckigen, vorzugsweise quadratischen Querschnitt hat, wobei jeder Winkeluntergurt (3.1) durch mindestens zwei Winkelprofile (6), die untereinander durch Schweißen fest verbunden sind, gebildet ist.

4. Laschenverbandvorrichtung (7) nach einem der vorhergehenden Ansprüche, wobei jede Hauptlasche (12) einen Querschnitt in "L"-Form mit zwei Flügeln hat, deren Ränder an die Ränder der Flügel eines benachbarten Winkelprofils geschweißt sind.

5. Laschenverbandvorrichtung (7) nach einem der vorhergehenden Ansprüche, wobei jede Hauptlasche (12) eine insgesamt flache Form und parallel zu der entsprechenden externen Primärseite (14.1) hat, und wobei jede Sekundärlasche (13) eine insgesamt flache Form und parallel zu der entsprechenden externen Sekundärseite (16.1) hat.

6. Baugruppe (1.2) für Turmdrehkrahn, wobei die Baugruppe (1.2) ein unteres Mastelement (1) und ein oberes Mastelement (2) umfasst, wobei das untere Mastelement (1) mehrere Winkeluntergurte (3.1) umfasst, wobei die Baugruppe (1.2) Laschenverbandvorrichtungen (7) nach einem der vorhergehenden Ansprüche umfasst, die eingerichtet sind, um das untere Mastelement (1) und das obere Mastelement (2) vorzugsweise demontierbar zu verbinden.

7. Baugruppe (1.2) nach Anspruch 6, bei der das untere Mastelement (1) vier Winkeluntergurte (3.1) umfasst, die jeweils an den vier Gipfeln eines Quadrats angeordnet sind, und wobei das obere Mastelement (2) vier Winkelobergurte (3.2) umfasst, die jeweils an den vier Gipfeln eines Quadrats angeordnet sind.

## Claims

1. A jointing device (7) for connecting two superimposed mast members of a tower crane, in particular for detachably connecting a lower mast member (1) to an upper mast member (2), the jointing device (7) comprising:
- a top portion (8.1) which is located at the top of a lower corner chord member (3.1) and which extends a lower mast member (1),
- a base portion (8.2) which is located at the base of a corresponding upper corner chord member (3.2) and which extends an upper mast member (2), and
- at least two connecting pins (10, 11) removable and respectively oriented according to a first direction (A) and a second direction (B) substantially orthogonal to each other,
the jointing device (7) being **characterized in that**:
- the top portion (8.1) comprises two primary joint bars (12) secured to two primary outer faces (14.1) which are vertical, opposite each other and defined by the lower corner chord member (3.1), each primary joint bar (12) protruding above the top of the lower corner chord member (3.1), each primary joint bar (12) having coaxial primary orifices (15.1);
- the top portion (8.1) comprises two secondary joint bars (13) secured to two secondary outer faces (16.1) which are vertical, opposite each other and defined by the lower corner chord member (3.1), each secondary joint bar (13) protruding above the top of the lower corner chord member (3.1), each secondary joint bar (13) having coaxial secondary orifices (17.1), the center point of each primary orifice (15.1) being located, relative to the top of the respective lower corner chord member (3.1), at a primary height (H15.1) different from the secondary height (H17.1) at which the center point of a respective secondary orifice (17.1) is located;
- the base portion (8.2) is formed by a tubular base of an upper corner chord member (3.2) of the upper mast member (2), said base portion (8.2) being disposed between the primary joint bars (12) and between the secondary joint bars (13),
- the base portion (8.2) having primary holes (15.2) and secondary holes (17.2) which open out respectively on outer faces (14.2, 16.2) of the upper corner chord member (3.2) which are vertical and opposite the upper corner chord member (3.2), the primary holes (15.2) and the secondary holes (17.2) being arranged to coincide in alignment respectively with the primary orifices (15.1) and with the secondary orifices (17.1), such that a connecting pin (10) passes through each primary orifice (15.1) and each primary hole (15.2) and that the other connecting pin (11) passes through each secondary orifice (17.1) and each secondary hole (17.2),
- the jointing device (7) further comprises primary plates (20) and secondary plates (21) which are respectively secured against primary inner faces (22) and secondary inner faces (23) defined by the upper corner chord member (3.2), the primary plates (20) and secondary plates (21) being shaped to contribute respectively to the support bearing surface of the connecting pins (10,11).

2. The jointing device (7) according to Claim 1, wherein the primary plates (20) and the secondary plates (21) are secured by welding respectively against primary inner faces (22) and secondary inner faces (23) defined by the upper corner chord member (3.2).

3. The jointing device (7) according to any of the preceding claims, wherein each lower corner chord member (3.1) has generally the shape of a tubular profile with a horizontal rectangular, preferably square, cross-section, each lower corner chord member (3.1) being formed by at least two angle bars (6) secured together by welding.

4. The jointing device (7) according to Claim 3, wherein each angle bar (6) has an "L"-shaped cross section with two flanges whereof the edges are welded to the edges of the flanges of an adjacent angle bar (6).

5. The jointing device (7) according to any of the preceding claims, wherein each primary joint bar (12) has a shape generally flat and parallel to the corresponding primary outer face (14.1), and wherein each secondary joint bar (13) has a shape generally flat and parallel to the corresponding secondary outer face (16.1).

6. An assembly (1.2), for a tower crane, the assembly (1.2) comprising a lower mast member (1) and an upper mast member (2), the lower mast member (1) including several lower corner chord members (3.1), the assembly (1.2) comprising jointing devices (7) according to any of the preceding claims arranged to connect the lower mast member (1) and the upper mast member (2), preferably in a detachable manner.

7. The assembly (1.2) according to Claim 6, wherein the lower mast member (1) includes four lower corner chord members (3.1) which are disposed respectively at the four apexes of a square, and wherein the upper mast member (2) includes four upper corner chord members (3.2) which are disposed respectively at the four apexes of a square.
